# EUROPÄISCHE PATENTSCHRIFT

(11) **EP 4 172 495 B1**
(45) Veröffentlichungstag und Bekanntmachung des Hinweises auf die Patenterteilung: **01.05.2024**
(21) Anmeldenummer: 21735154.3
(22) Anmeldetag: 21.06.2021
(51) Int. Cl.: F03D 7/02, F03D 13/10

(54) **REVERSIBLE AUFHÄNGUNG FÜR EINEN SCHWINGUNGSDÄMPFER BEI DER ERRICHTUNG UND DEMONTAGE EINER WINDKRAFTANLAGE**
REVERSIBLE SUSPENSION FOR A VIBRATION DAMPER IN THE CONSTRUCTION AND DISASSEMBLY OF A WIND TURBINE
SUSPENSION RÉVERSIBLE POUR AMORTISSEUR DE VIBRATIONS DANS LA CONSTRUCTION ET LE DÉMONTAGE D'UNE ÉOLIENNE

(30) Priorität: 24.06.2020 EP 20000224
(43) Veröffentlichungstag der Anmeldung: 03.05.2023
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2021/025216
(87) Internationale Veröffentlichungsnummer: WO 2021/259518

(56) Entgegenhaltungen:
- EP-A2- 1 008 747
- EP-B1- 1 008 747
- WO-A1-2014/040598
- WO-A1-2015/062608
- DE-A1- 3 414 706
- DE-C2- 3 414 706

## Beschreibung

Die Erfindung betrifft eine neue einfach handzuhabende und reversibel einsetzbare Aufhängungsvorrichtung durch die ein Schwingungsdämpfer an Teilen einer Windkraftanlage, insbesondere am Turm, Turmsegmenten und der Gondel-Rotor-Einheit außenseitig angebracht werden kann. Die Erfindung betrifft insbesondere eine Aufhängung eines Schwingungsdämpfers, welcher im Zuge der Errichtung und Demontage einer Windkraftanlage benötigt wird, um in dieser Bauphase auftretende Vibrationen zu unterbinden oder zu beruhigen.

Moderne Windkraftanlagen sind im Laufe der letzten Jahre immer effizienter in Bezug auf ihre Energiegewinnung aus Windkraft geworden. Dazu war es notwendig, größerer Rotoren; Gondeln und Generatoren sowie höhere und stärkere Türme einzusetzen, welche die höheren Lasten der Aufbauten zu tragen haben aber auch den höheren Wind- und Schwingungskräften standhalten müssen. Höhere Türme bestehen aber aus Gründen der Fertigung, des Gewichtes und des Transportes aus mehreren einzelnen Turmsegmenten, die vor Ort mit Hilfe von Kränen oder ähnlichen Vorrichtungen aufeinandergestellt und zusammengefügt werden müssen.

Während eine fertig aufgestellte Windkraftanlage durch den Einsatz eines gezielt auf die Eigenfrequenz des gesamten fertigen Systems angepassten Schwingungsdämpfers, welcher zumeist im Inneren der Anlage fest installiert ist, auf die auftretenden Schwingungskräfte während des Betriebes eingestellt und so vor unerwünschten Schwingungen weitgehend geschützt werden kann, besteht bei bzw. während der Dauer der Errichtung der Windkraftanlage aus mehreren Turmsegmenten, der Gondel und der Rotoren, das Problem von plötzlich auftretenden Schwingungen, einschließlich solcher, die durch Karman'sche Wirbel hervorgerufen werden. Überdies trägt ein angebrachter Rotor zur Dämpfung der fertigen Windkraftanlage bei. Da dieser erst als letztes montiert wird, befindet sich die unfertige Anlage während der Errichtung in einem weniger gedämpften Zustand, der unter bestimmten Bedingungen problematisch sein kann.

Um diesem Problem zu begegnen, ist es insbesondere bei sehr hohen Anlagen notwendig geworden, während des oft länger dauernden Zusammenbaus, speziell für diese Zwecke geeignete Schwingungsdämpfer einzusetzen, welche zweckmäßigerweise an der Außenseite des betreffenden Bauteils, beispielsweiser eines Turmsegments, temporär angebracht und nach Errichtung des jeweiligen Bauteils wieder entfernt werden.

Die WO 2020/001720 A1 beschreibt ein Verfahren zur Errichtung einer Windkraftanlage unter Verwendung von mindestens zwei gleichzeitig zeitweise an die Turmwand außenseitig angebrachten Schwingungsdämpfern.

In den internationalen Anmeldungen WO 2015/062608 A1und WO 2014/040598 A1 wird ein und derselbe Pendel-Schwingungsdämpfer für eine Windkraftanlage beschrieben, welcher über einen abnehmbaren Haken an einer Halterung aufgehängt ist, wobei die Halterung an der Innenwand des Turmes in verschiedenen Höhen durch entsprechend aufwendige Montage und Demontage angebracht werden kann.

Die EP 1 008 747 A2 offenbart einen Pendel-Schwingungsdämpfer einer Windkraftanlage, welche über ein elastisches Gelenk an einer Trägerkonstruktion befestigt ist, welche im Inneren des Turmes im obersten Segment irreversibel angebracht ist.

Das zeitweilige aber wiederholte Anbringen und Entfernen von Schwingungsdämpfern an der Außenseite des jeweiligen Anlagen-Bauteils bedarf eines relativ hohen Einsatzes von zahlreichen Arbeitskräften am einzelnen liegenden Bauteil und an der teilweise errichteten Turmkonstruktion. Insbesondere müssen die Schwingungsdämpfer wiederholt am jeweiligen Turmsegment angeschraubt und wieder gelöst werden. Dies geschieht in der Regel über Bohrungen in der Turmwand von innen. Der im wesentlichen gleiche Aufwand muss auch beim Entfernen der Schwingungsdämpfer von den einzelnen Turmsegmenten betrieben werden. Dies ist nicht nur zeitaufwendig sondern erhöht die Kosten für die Errichtung oder Demontage einer Anlage.

Es bestand so die Aufgabe, den zeitlichen, arbeitstechnischen und kostenmäßigen Aufwand zur Anbringung eines Schwingungstilgers im Zuge der Errichtung oder Demontage einer Windkraftanlage deutlich zu verringern. Dies kann durch eine neuartige unten und in den Ansprüchen näher charakterisierte Aufhängungsvorrichtung für einen für diese Zwecke einsetzbaren Schwingungsdämpfer erreicht werden.

Gegenstand der Erfindung ist daher eine reversibel einsetzbare Aufhängung mit mindestens einem Aufhängungspunkt, vorzugsweise drei Aufhängungspunkten, für einen Schwingungsdämpfer einer Windkraftanlage, geeignet für die Errichtung und/oder Demontage des Turms, einzelner Turmsegmente und der Gondel-/Rotoreinheit oder Teilen davon, wobei das Anbringen oder Entfernen des besagten Schwingungsdämpfers am oder vom Turm oder Turmsegment oder der Gondel-/Rotoreinheit außenseitig erfolgt und keiner zusätzlichen Befestigungsmittel bedarf.

Die Aufhängung oder die Aufhängungsvorrichtung umfasst dabei:
- mindestens ein fest angebrachtes erstes Halterungselement und
- mindestens ein fest angebrachtes zweites Halterungselement, wobei
   (i) das mindestens eine besagte erste Halterungselement und das mindestens eine besagte zweite Halterungselement einen Aufhängungspunkt für den Schwingungstilger am betreffenden liegenden oder stehenden Anlagenbauteil bilden, und ein Halterungselement turmseitig und das andere dämpferseitig angebracht ist,
   (ii) das mindestens erste Halterungselement (3) so gestaltet und ausgestattet ist, dass es oder ein Teil davon in eine entsprechend dimensionierte und passend zu ihm ausgerichtete Öffnung (2.10) des mindestens zweiten Halterungselements (2) eingeführt und gleitend oder rutschend bis zu einem festen Lagerendpunkt (2.5) am anderen Ende der Öffnung (2.10) des mindestens zweiten Halterungselements versenkt werden kann, und
   (iii) dadurch der Schwingungsdämpfer (4) sowohl in aufrechter als auch in liegender Stellung des Turms, Turmsegments oder der Gondel-/Rotoreinheit am besagten Lagerendpunkt alleine durch seine Schwerkraft fest mit dem Turm oder Turmsegment (1) verbunden ist, und alleine durch Anheben und Herausziehen aus der Halterung wieder vom Turm, Turmsegment oder der Gondel-Rotor-Einheit gelöst werden kann.

Das besagte erste Halterungselement (3) umfasst im Wesentlichen einen Haltebolzen (3.2) oder Halterungsstift, der beispielsweise von zwei Halterungsblechen (3.3) seitlich geführt und gehalten wird. Der Haltebolzen oder Haltestift (3.2) ist vorzugsweise rund und besitzt einen Durchmesser, der es erlaubt, dass er in die besagte Öffnung (2.10) des zweiten Halterungselements (2) hinein- oder herausgeschoben werden kann.

Der Durchmesser des Haltebolzens (3.2), beträgt je nach Tilgergewicht und Windkraftanlage zwischen 10 und 50 mm.

In einer bevorzugten Ausführungsform der Erfindung ist der Haltebolzen (3.2) beidseitig von senkrecht zur Bolzenachse angeordneten Führungsscheiben oder Führungsplatten (3.1) begrenzt, welche vorzugsweise nach außen rund oder konisch gebogen sind. Diese Scheiben oder Platten erleichtern das Einführen des Bolzens (3.2) in die Öffnung (2.10) des zweiten Halterungselements (2).

Das erste Halterungselement (3) kann sowohl an dem Schwingungsdämpfer (4) als auch an dem zu verbindenden Bauteil der Anlage (Turm, Gondel) befestigt werden.

Das zweite Halterungselement (2) ist somit für die Aufnahme und reversible Fixierung des beschriebenen Halterungselementes (3) bzw. seines Haltebolzens (2) vorgesehen. Das Halterungselement (2) weist dazu, wie bereits gesagt, erfindungsgemäß eine wenigstens zum Teil als Schlitz (2.8) gestaltetet Öffnung (2.10) auf mit einem vorderen offenen Ende, welche der Einführung der Halterungselements (2) dient, und einem hinteren geschlossenen Ende welcher als Arretier- oder Lagerendpunkt (2.5) für den Haltebolzen (3.2) fungiert. Der Durchmesser des Schlitzes ist so gewählt, dass er den besagten Haltebolzen (3.2) aufnehmen kann, wobei der Haltebolzen so in den Schlitz eingeführt wird, dass die Achse des Haltebolzens senkrecht zur Längsachse des Schlitzes (2.8) angeordnet ist. Das hintere geschlossenen Ende des Schlitzes (2.8) ist also von seiner Größe und Form so passend gestaltet, dass es den Lagerendpunkt (2.5) für den Haltebolzen (3.2) darstellt.

Die Öffnung (2.10) bzw. der Schlitz (2.8) des zweiten Halterungselementes (2) mit seinem Lagerendpunkt (2.5) weist erfindungsgemäß einen Neigungswinkel (5') gegenüber einer Fläche jenes Teils der Anlage auf, an dem das Halterungselement (2) befestigt wird. Damit wird eine Einführen des Halterungselementes (3) mit seinem Haltebolzen (3.2) zum einen erleichtert, zum anderen aber wird für eine sichere Lagerung des Schwingungsdämpfers (4) nach Errichtung des betreffenden Bauteils der Anlage gesorgt.

Die Öffnung (2.10) umfasst nicht nur, wie beschrieben, den Schlitz (2.8) mit dem Lagerendpunkt (2.5) auf, sondern auch am gegenüberliegenden offenen Ende mindestens eine Gleit- oder Rutschfläche (2.4)(2.6) für das Halterungselement (2) auf. Vorzugsweise weist der Schlitz (2.8) am offenen Ende zwei gegenüberliegenden Gleit-/Rutschflächen auf, womit es erfindungsgemäß ermöglicht wird, dass das Bauteil, welches mit dem Halterungselement (3) fest verbunden ist (Schwingungsdämpfer oder Turmsegment/Gondel) sowohl liegend als auch stehend montiert oder demontiert werden kann (siehe unten). In diesem Fall weisen die beiden Rutsch-/Gleitflächen (2.4)(2.6) einen Winkel zueinander auf, der.

Generell ist ein erfindungsgemäß ein Neigungswinkel der Rutsch-/Gleitflächen (2.4)(2.6), bzw. des Schlitzes (2.8) notwendig und vorgesehen, dessen Betrag sich nach den entsprechenden Materialeigenschaften (vorzugsweise Stahl auf Stahl) und der daraus abzuleitenden Gleitreibung ableiten lässt und bestimmt wird durch die erforderliche Fähigkeit des ersten Halterungselementes (3) auf der jeweiligen Fläche selbständig, das heißt, nur durch die Schwerkraft, zu gleiten und entlang des Schlitzes bis zum Lagerendpunkt (2.5) zu rutschen. Der hierbei wirksame Reibfaktor kann durch den Einsatz von Schmiermitteln verringert werden, so dass damit geringere Neigungswinkel möglich sind. Auch bei gegebenen Winkeln kann das Rutschverhalten durch Schmieren verbessert werden.

In einer ersten Ausführungsform der Erfindung weist die erste Gleit-/Rutschfläche (2.4) einen Neigungswinkel (5) gegenüber einer Fläche jenes Teils der Anlage auf, an dem das Halterungselement (2) befestigt wird. Dieser Neigungswinkel ist vorzugsweise im Betrag und Ausrichtung mit dem Neigungswinkel (5') des Schlitzes (2.8) bzw. der Öffnung (2.10) im Halterungselement (2) identisch. Damit kann die erste Gleit-/Rutschfläche (2.4) am offenen Ende der Öffnung (2.10) in gerader Verlängerung des Schlitzes (2.8) angebracht sein.

In einer weiteren Ausführungsform der Erfindung weist das Halterungselement (2) eine zweite Gleit-/Rutschfläche (2.6) auf, die vorzugsweise gegenüber der ersten Gleit-/Rutschfläche (2.4) in Verlängerung des Schlitzes (2.8) angeordnet ist. Die zweite Gleit-/Rutschfläche (2.6) weist einen Neigungswinkel (6) auf, jedoch hier gegenüber einer gedachten senkrechten Linie auf die Fläche jenes Teils der Anlage, an dem das Halterungselement (2) befestigt wird. In seinem Betrag entspricht der erfindungsgemäß erforderliche Neigungswinkel (6) dem des Neigungswinkels (5), bzw. (5'). Aufgrund der Geometrie geht also die zweite Gleit-/Rutschfläche (2.6) durch einem Knickpunkt (2.7) in die Führung durch den Schlitzes (2.8) über. Während also die Gleit-/Rutschfläche (2.4) in gerader Verbindung mit dem in der Regel ebenfalls geraden Schlitz (2.8) steht, ist die Gleit-/Rutschfläche (2.6) gegenüber dem Schlitz (2.8) abgewinkelt.

Erfindungsgemäß betragen die besagten erfindungsgemäß erforderlichen und oben definierten Neigungswinkel (5)(5')(6) für die gängigen hier verwendeten Werkstoffe mindestens 20°, vorzugsweise mindestens 25° - 26°, damit eine selbständiges Rutschen/Gleiten der betreffenden Teile der Halterungselemente (2)(3) gewährleistet ist. Dies gilt insbesondere für Stahl.

Die besagten Winkel dürfen aber jedoch auch nicht zu groß werden, da ansonsten die Öffnung (2.10) zu klein wird, um die Halterungselemente miteinander zu verbinden. Erfindungsgemäß sollten die Neigungswinkel (5)(6), wie oben definiert, Werte zwischen 20° - 40°, vorzugsweise 25 - 35°, und insbesondere 26 - 32° aufweisen.

Die Gestaltung des Halterungselementes (2) ist in einer bevorzugten Ausführungsform so vorgesehen, dass der schräge Schlitz (8) an seinem offenen Ende sowohl die Gleitfläche (2.4 als auch gegenüberliegend die (Gleitfläche (2.6), ggf. mit dem Knickpunkt (2,7) aufweist. Die Gleitfläche (2.4) wird ausschließlich für die Montage des Schwingungsdämpfers (4) bei liegenden Anlagenteilen (Turmsegmente) benötigt, währende die Gleitfläche (2.6) bei der Montage bei stehenden, bereits errichteten Anlagenteilen, als auch bei der Demontage benötigt wird.

Vorzugsweise ist das erste Halterungselement (3) außen am zu befestigenden Tilger (4) angebracht und das zweite Halterungselement (2 an der Außenseite des Turmsegments oder der Gondel-Rotor-Einheit.

Es ist jedoch auch möglich, das Halterungselement (3) turmseitig anzubringen, und das Halterungselement (2) am Schwingungsdämpfer (4).

Die oben beschriebenen Aufhängung stellt erfindungsgemäß einen so genannten Aufhängungspunkt dar. Ein Aufhängungspunkt dieser Aufhängung, besteht also erfindungsgemäß im Wesentlichen aus einem Paar von Halterungselementen (2) und (3), wobei ein Halterungselement dämpferseitig und das andere Halterungselement turm- bzw. anlagenseitig vorzugsweise vormontiert wurde. Zur Aufhängung des Schwingungsdämpfers (4) an einem Teil der Windkraftanlage (Turm, Gondel) werden in der Regel mindestens zwei, vorzugsweise jedoch mindestens drei oder vier Aufhängungspunkte mit jeweils drei oder vier Paaren von Halterungselementen (2)(3) benötigt.

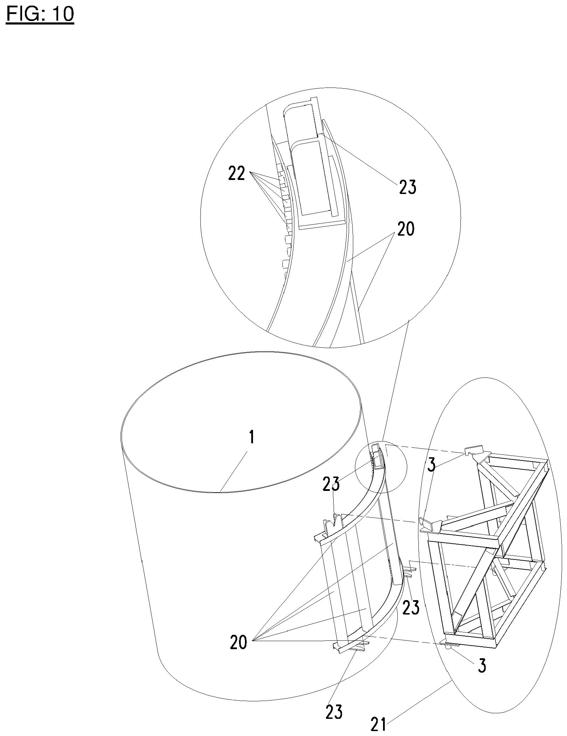

Die einzelnen Befestigungspunkte am Turm einer Windkraftanlage leiten Biegemomente und Schubkräfte in die relativ dünne Turm-Haut ein. Dies kann, bedingt durch die Gewichtslast und die dynamischen Lasten des Schwingungstilgers, zur Schädigung des Turmes führen, insbesondere dann, wenn die einzelnen Elemente nicht verhältnismäßig groß sind, um die eingeleiteten Lasten großflächig zu verteilen. In einer weiteren Ausführungsform der Erfindung wird daher eine Trägerkonstruktion vorgeschlagen, welche die notwendigen Lasteinleitungspunkte miteinander zu einem geschlossenen Rahmen (20)(21)(22)(23) verbindet. Somit werden an den Befestigungspunkten nur noch Scherkräfte und nur geringe Biegebelastungen eingeleitet (Fig. 10).

Die erfindungsgemäße Aufhängung ermöglicht eine besonders leichte, arbeitssparende und damit kostengünstige Anbringung oder Entfernung eines Schwingungsdämpfers, welcher im Zuge der Errichtung oder Demontage einer Windkraftanlage benötigt wird, um unerwünschte Schwingungen zu minimieren.

Daher ist Gegenstand der Erfindung auch die Verwendung einer entsprechenden reversiblen Aufhängung insbesondere bei der Montage eines Schwingungsdämpfers am liegenden oder stehenden Turm, Turmsegment oder an der Gondel-Rotor-Einheit während der Errichtung einer Windkraftanlage.

Gegenstand ist somit auch ein Verfahren zur Anbringung eines Schwingungsdämpfers an einem liegenden oder stehenden Turmsegment oder einer Gondel mit Hilfe der beschriebenen erfindungsgemäßen Aufhängung.

Dieses Verfahren wird im Folgenden im Detail beschrieben.

Die Befestigung muss erfindungsgemäß folgende Aufgaben erfüllen:
(i) Montage am liegenden Turm:
   Bevor der Turm errichtet wird muss der Tilger am liegenden Turm so befestigt werden, dass der Turm mitsamt Tilger von der horizontalen Lage in die vertikale Position;
   aufgestellt werden kann. Die Fixierung muss während der Errichtungsphase der gesamten Anlage sicher gewährleistet sein.
(ii) Montage am stehenden Turm:
   Für Reparaturaufgaben muss der Tilger an der bereits aufgebauten Anlage ohne Hilfspersonal vor Ort fixierbar sein
(iii) Demontage am stehenden Turm:
   Der Tilger muss nach der Errichtung der Windkraftanlage vom Turm ohne Hilfspersonal vor Ort entfernbar sein.

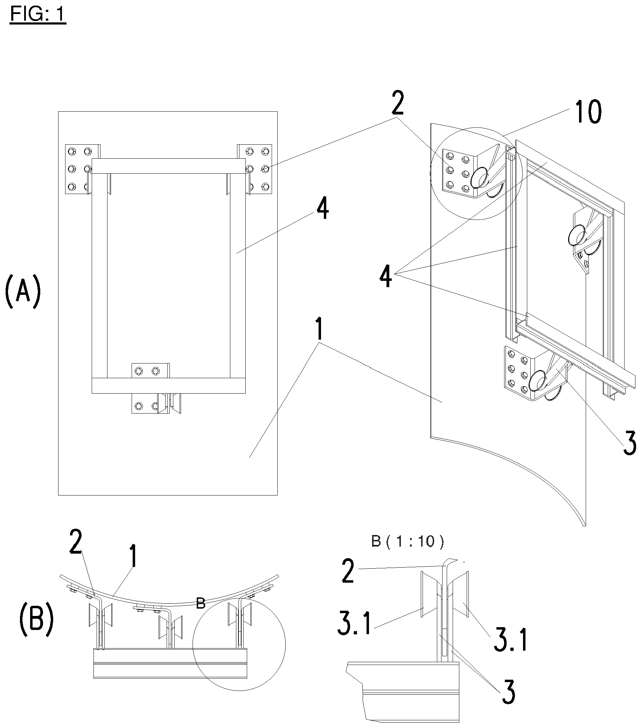

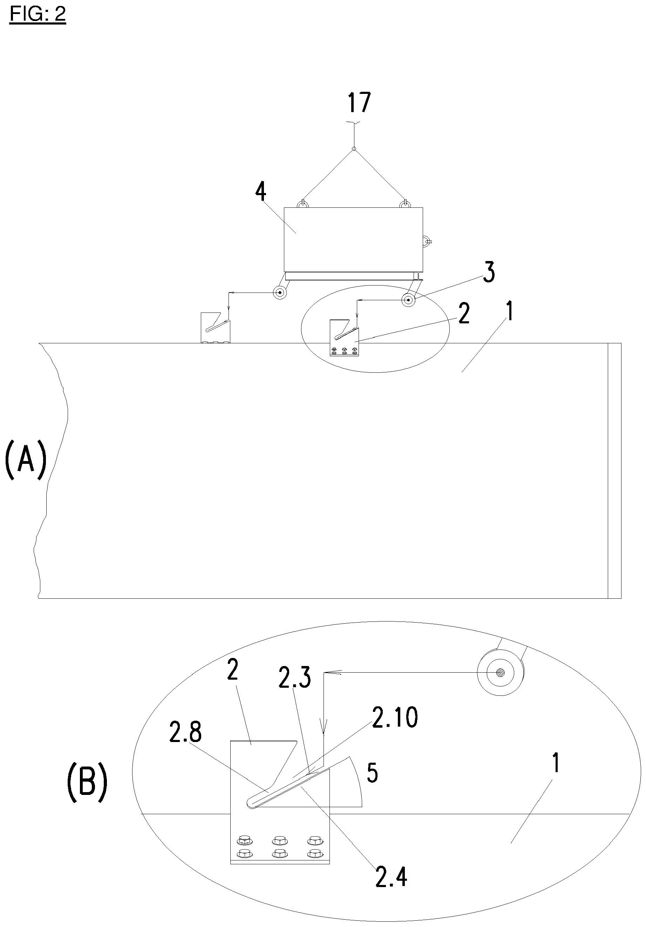

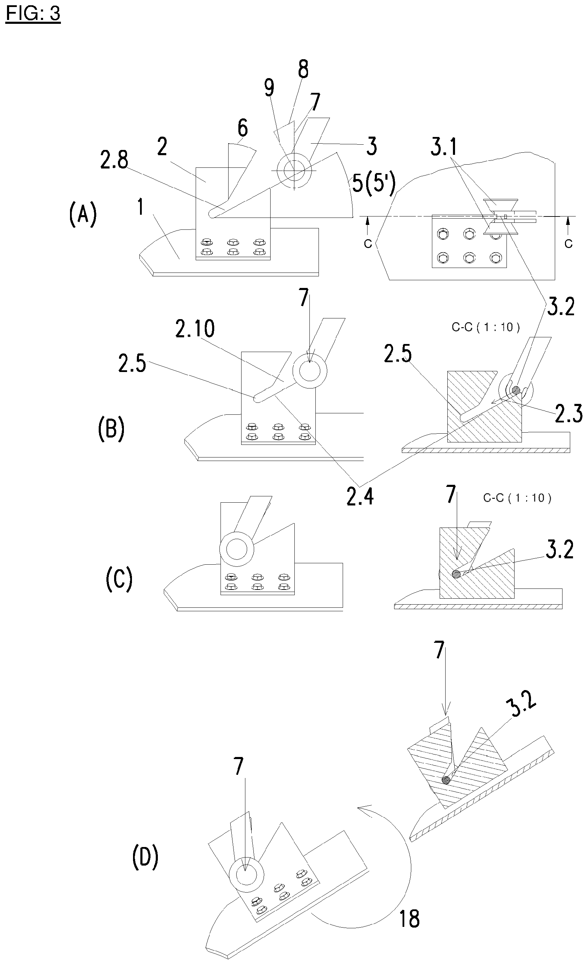

### Zu (i) Montage am liegenden Turm : (Fig. 2 und 3):

Der Tilger wird mit dem Kran von oben auf den liegenden Turm aufgesetzt. Dabei werden mehrere, vorzugsweise drei oder auch vier am Tilger angebrachte Halterungen (3) in die nach oben offenen Schlitze (2.8) der entsprechend angebrachten drei oder vier turmseitigen Halterungen (2) eingeführt. Die Schlitze (2.8) zeigen mit ihrem Neigungswinkel (5') in Richtung Turm - Unterseite und sind in dieser Richtung am unteren Lagerendpunkt (2.5) geschlossen.

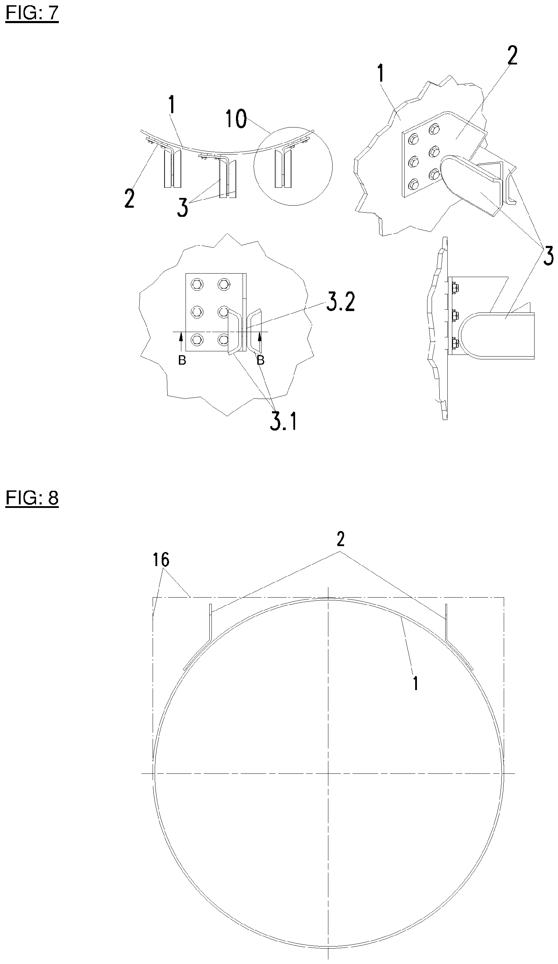

Um die Position besser treffen zu können, dienen die Führungsvorrichtungen (3.1) am Halterungselement (3). Diese können aus konischen Elementen bestehen oder aber auch wie in Fig. 7 dargestellt, eine Einheit mit dem Halterungselement (3) bilden.

Alternativ können die Einführhilfen (3.1) auch an den turmseitigen Halterung (2) angebracht werden.

Zuerst wird der Schwingungsdämpfer (4), an dem die Halterungselemente (3) zuvor montiert worden waren, mit einer geeigneten Hebevorrichtung (Kran) in Richtung der vorgesehenen Position gehoben. Dann werden die Halterungselemente (3), mit dem Haltebolzen (3.2) auf die Gleitfläche (2.4) des Halterungselementes (2) abgesenkt. Die Halterungselemente (2) mit dem Schlitz (2.8) und der Gleitfläche (2.4) waren zuvor auf dem ausgewählten Turmsegment (oder der Gondel) fest montiert worden. Die Gleitfläche (2.4) hat einen Neigungswinkel (5) gegenüber des waagrecht liegenden Anlagenteils, der so steil ausgeführt ist, dass der Haltebolzen (3.2) aufgrund der wirksamen Schwerkraft entlang des Rutschweges (2.3) bis in die Endlage des Lagerendpunktes (2.5 ) gleitet.

Dieser Winkel (5) richtet sich nach der Gleitreibung der funktionell wirksamen Materialien (hier Stahl auf Stahl), muss also in seinem Wert so groß sein, dass die Haft- und Gleitreibung alleine durch die wirksame Schwerkraft überwunden wird. Für beispielsweise einen Reibungskoeffizienten µ > 0,5 ist der erforderliche Neigungs-Winkel größer 28°. Ab diesem Winkel ist ein problemloses Rutschen von Stahl auf Stahl sicher möglich. Im konkreten Fall der Fig. 2 beträgt der Neigungswinkel (5) etwa 30° (Stahl auf Stahl).

Nachdem sichergestellt ist, dass alle drei bzw. vier Halterungspaare (2)(3) miteinander verbunden sind, wird das betreffende Turmsegment (1) mit dem an der Oberseite platzierten Schwingungsdämpfer (4) in die Senkrechte aufgerichtet. Bei dieser Bewegung wird der Haltebolzen.(2) durch die nun erhöhte wirksame Schwerkraft verstärkt in die Endposition (2.5) des Schlitzes (2.8) gedrückt, so das ein Herausfallen bzw. ein Lösen aus der Halterung (2) des Schwingungsdämpfers (4) während der Bewegung ausgeschlossen ist.

Das Gewicht des Schwingungsdämpfers (4) alleine reicht nun aus, um ihn am Turm, bzw. Turmsegment so zu "befestigen", so dass Schwingungen des Turms bzw. Turmteils während der Errichtung der Anlage direkt vom angebrachten Schwingungsdämpfer aufgenommen und reduziert werden können.

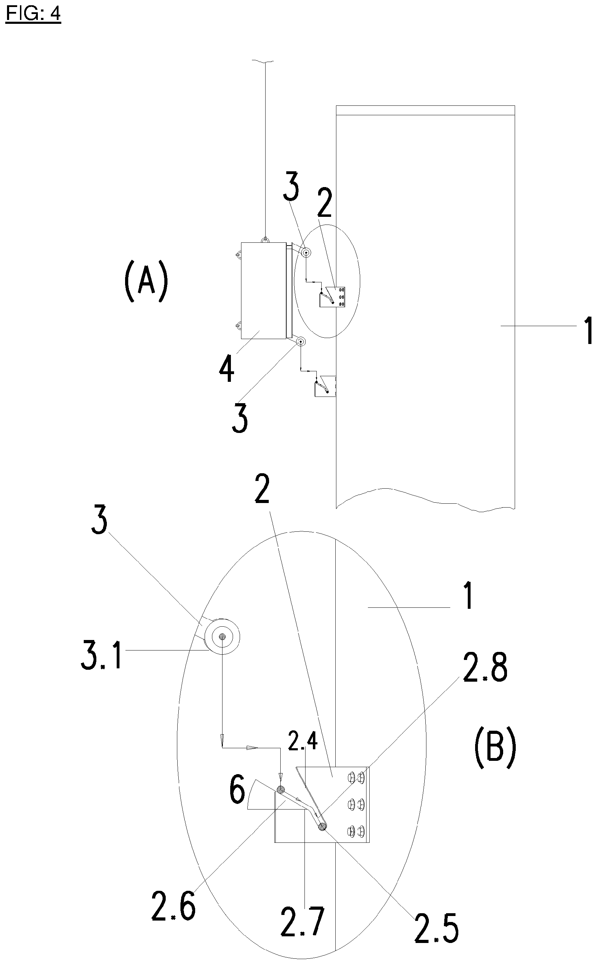

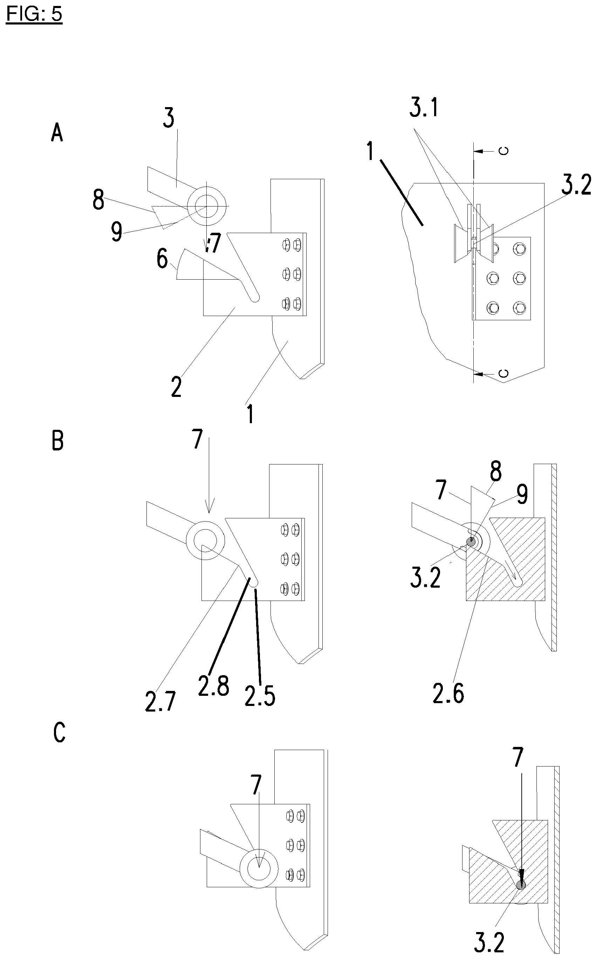

### Zu (ii): Montage am stehenden Turm (Abb. 4 und 5)

Dazu wird der Schwingungsdämpfer (4) mit dem Haltebolzen (3.2) seines jeweiligen Halterungselementes (3) auf die schräge Gleitfläche (2.6) des jeweiligen Halterungselementes (2) aufgelegt, von wo er aufgrund seiner wirksamen Schwerkraft über einen Knickpunkt (2.7) nach unten in den noch steiler geneigten Schlitzes (8) rutscht und bis zum Anschlag in den Lagerendpunkt (2.5) gleitet.

Die Gleitfläche (2.6) weist dabei (analog wie die Gleitfläche (2.5)) einen Neigungswinkel (6) auf der im Wert dem Betrag des Neigungswinkels (5) (5') entspricht, jedoch gegenüber der Horizontalen sondern gegenüber der Vertikalen festgelegt ist. Im Bezug auf Betrag des Neigungswinkels ist das Gleiche zu sagen wie oben ausführlich geschildert.

### Zu (iii): Demontage am stehenden Turm

Zur Demontage am stehenden Turm wird der Schwingungsdämpfer (4), welcher beispielsweise mit drei Halterungselementen (3) ausgestattet ist, mit Hilfe eines Krans oder einer entsprechenden Hebevorrichtung einfach nach oben aus den Schlitzen (2.8) der Halterung (2) gezogen. Hierfür sind also außer dem Kranführer keine weiteren Arbeitskräfte oder Aktionen notwendig.

Bei der Demontage wird der Schwingungstilger üblicherweise mit einem Kranhaken verbunden. Dazu kann ein langes Seil, vorzugsweise Last Seil, verwendet werden, welches mit einer Hilfsleine auf die jeweils nächsthöhere Turmebene bzw. auf die Gondel gezogen wird, um es dort am Kranhaken zu befestigen. Alternativ könnte eine automatische Einhängevorrichtung verwendet werden.

Im Folgenden werden die gezeigten Abbildungen beschrieben:
Fig. 1:
   (A) zeigt den Anbau des Schwingungsdämpfers (4) am Turm (1) in der Draufsicht und perspektivisch. Der Schwingungsdämpfer (4) wird hier durch drei Aufhängungen wie abgebildet, gehalten. Es wird hier nur der Trägerrahmen des Schwingungsdämpfers gezeigt, um den Blick auf die Aufhängungspunkte und ihrer Konstruktion zu ermöglichen. Jede der drei Aufhängungen in den drei Aufhängungspunkten umfasst ein Halterungselement (2) und ein Halterungselement (3). Das Halterungselement (2) mit seinem Schlitz (2.8) ist am Turmsegment befestigt, während das Halterungselement (3) am Schwingungsdämpfer bzw. dessen Rahmen montiert ist.
   (B) zeigt in zwei detaillierten Darstellungen die Verbindung zwischen den Halterungselementen (2) und (3) aus (A) von oben.
      (3.1) stellt dabei eine Einführhilfe (3.1) dar, welche der Hebevorrichtung (Kran) ermöglicht, den Schwingungsdämpfer (4) mit seinem Halterungselement (3) leichter und exakt genug an das vormontierte Halterungselement (2) am Turm zu positionieren.
Fig. 2 beschreibt im Gröberen (A) und im Detail (B) den Einbau in den liegenden Turm. Der Tilger (4) wird am Kran hängend in die Einbauposition gebracht und anschließend wird die Halterung (3) in die turmseitige Halterung (2) eingeführt. Beim Auflegen des Tigers (4) rutscht dieser über die Gleitfläche (2.4) in seine endgültige Lage am Lagerendpunkt (2.5). Die Gleit-/Rutschfläche (2.4) weist einen Winkel (5) gegenüber der hier waagrechten Fläche der Turmwand (1) auf. (2.3) beschreibt den Rutschweg als solchen, (2.8) stellt den eigentlichen Schlitz dar. Das Halterungselement (2) weist zudem gegenüber der Gleit-/Rutschfläche (2.4) eine Gleitfläche (2.6) auf mit einer Abknickung (2.7). Diese Gleitfläche wird bei der Montage am stehenden Turm benötigt.
Fig. 3 zeigt in einzelnen Schritten (A - D, jeweils zwei Ansichten) die detaillierte Montage eines Schwingungsdämpfers (dargestellt ist hier nur das am Dämpfer vorinstallierte Halterungselement (3)) am liegenden Turm (1)
   (A) der Tilger wird in die Montageposition gebracht. Eingezeichnet sind neben den Neigungswinkeln (5)(6) auch die wirksamen Kräfte: Gewichtskraft (7), Reibkraft (8), Normalkraft (9).
   (B) der Tilger wird mit der ein Einführhilfe (3.1) in die richtige Position verbracht und auf die Gleitfläche (2.4) aufgelegt. Ferner ist die Position des Haltebolzens (3.2) zu erkennen.
   (C) aufgrund der Gleit-Eigenschaften rutscht der Tilger mit den Haltebolzen (3.2) über die Gleitfläche (2.4) in die endgültige Position (2.5). Die Richtung der Gewichtskraft des Schwingungsdämpfer wird durch (7) dargestellt.
   (D) der Turm wird in die aufrechte Position verbracht. Dabei wird deutlich, dass mit zunehmendem Aufrichtwinkel (18), der Haltebolzen (3.2) stärker in die Fixierung (2.5) gepresst wird.
Fig. 4 und Fig 5: zeigen die Montage eines Schwingungsdämpfers (4) am stehenden Turm (1) (Fig. 4, Übersicht oben (A), und unten im Detail (B), und in Einzelschritten Fig. 5 A - C). Hier wird der Dämpfer mit dem Bolzen (3.2) des vormontierten Halterungselementes (3) auf die Gleitfläche (2.6) des am Turm vormontierten Halterungselementes (2) aufgelegt und rutscht über dies Gleitfläche (2.6) über den Knickpunkt (2.7) und entlang des hierzu relativ stärker angewinkelten Schlitzes (2.8) in die endgültige Lage im Lagerendpunkt (2.5).
Fig.5A der Tilger wird in die richtige Position gebracht,
Fig. 5B der Haltebolzen (3.2) wird auf die Gleitfläche (2.6) aufgelegt und rutscht über den Knick. (2.7) in die endgültige Position (2.5) des Schlitzes (2.8),
Fig. 5C der Tilger ist nun in der endgültigen Position.

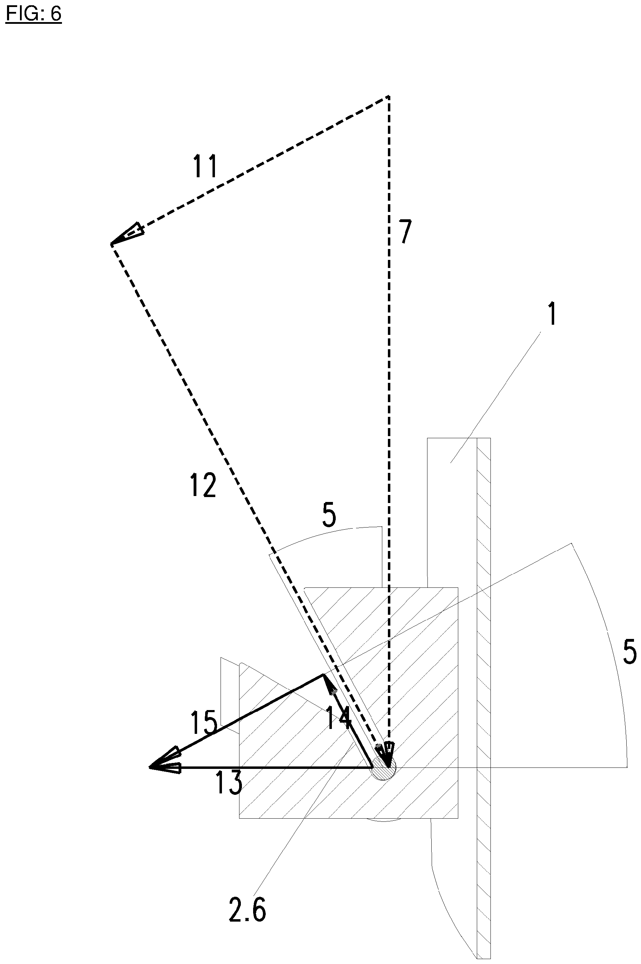

Fig. 6 zeigt die Kraftverhältnisse im eingebauten / fixierten Zustand eines Schwingungsdämpfers. Der Kraftpfeil (7) zeigt die Schwerkraft durch das Eigengewicht des Tilgers an. Diese Schwerkraft ist aufgeteilt in eine Kraft (12) in Richtung der Gleitfläche (2.6) und in eine senkrecht dazu stehende Normalkraft (11), welche senkrecht auf die Gleitfläche (2.6) gerichtet ist. Die aus der Schwerkraft resultierenden Kräfte sind gestrichelt dargestellt. Der Kraft Pfeil (13) ist die durch den Tilger verursachte Zugkraft in Querrichtung. Auch diese Kraft ist aufgeteilt in eine Kraft (14) in Richtung der Gleitfläche und die Normalkraft (15), welche senkrecht zur Gleitfläche steht. Aufgrund des jetzt entstehenden Winkels (5) ergibt sich unter Vernachlässigung der Schwerkraft ein Reibwert für Stahl größer 0,5, so dass ein Herausrutschen der Halterung (3) am Schwingungsdämpfer aus der Befestigung nicht mehr möglich ist. Unter Berücksichtigung der Schwerkraft, steht der Rutschkraft aus Querkraft (14) die Kraft (12) entgegen. Da die Kraft (12) deutlich größer ist als die Kraft (14) besteht eine sichere Anbindung eines Schwingungsdämpfers nach der beschriebenen Methode.
Fig. 7 Hier ist nochmals in unterschiedlichen Ansichten die Anbindung am Turm (1) mit drei Aufhängungspunkten
   dargestellt. In diesem Bild ist gegenüber den bisherigen Darstellungen die Halterung (3) mit integrierter Einführhilfe (3.1) gezeigt.
Fig. 8 Gezeigt sind zwei Halterungselement (2), die am Turm einer Windkraftanlage angebracht sind. Es ist vorteilhaft, wenn die turmseitige Befestigung bereits beim Turmhersteller angebracht werden kann. Allerdings muss diese dann so ausgeführt sein, dass sie beim Transport nicht über das maximale Transportprofil (16) herausragt._Deshalb ist es vorteilhaft die Elemente in der Breite anzuordnen, dass diese nicht über den Turmradius nach oben hinausragen.

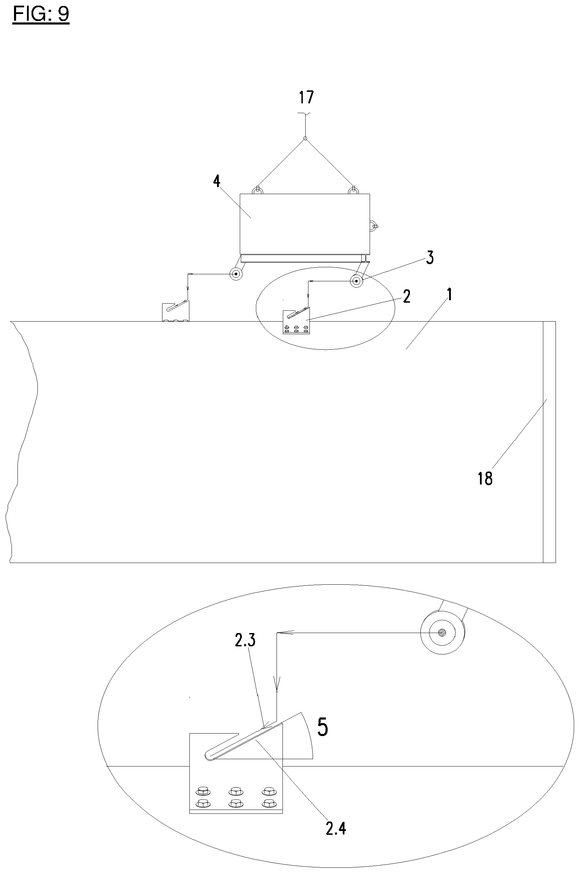

Fig. 9 Falls nur die Montage am liegenden Turm erforderlich ist, kann die turmseitige Halterung (2) vereinfacht, d.h. ohne die Gleit-/Rutschfläche (2.6), ausgeführt werden.
Fig. 10: zeigt eine Tragerahmen für den Schwingungstilger, der außenseitig an der Turm-Wand angebracht ist. Die Konstruktion umfasst einen turmseitigen Rahmen (20) mit entsprechenden Befestigungselementen (22) am Turm und einen dämpferseitigen Rahmen (21). Der turmseitige Rahmen weist Befestigungspunkte (23) auf, um den Tilger über den Rahmen (21) mit dem Turm zu verbinden.

## Patentansprüche

1. Reversibel einsetzbare Aufhängung mit mindestens einem Aufhängungspunkt für einen Schwingungsdämpfer einer Windkraftanlage, geeignet für die Errichtung und/oder Demontage des Turms, einzelner Turmsegmente und der Gondel-/Rotoreinheit oder Teilen davon, wobei das Anbringen oder Entfernen des Schwingungsdämpfers am oder vom Turm oder Turmsegment oder der Gondel-/Rotoreinheit außenseitig erfolgt und keiner zusätzlichen Befestigungsmittel bedarf, umfassend mindestens ein fest angebrachtes erstes Halterungselement (3) und mindestens ein fest angebrachtes zweites Halterungselement (2), wobei
(i) das besagtes erste Halterungselement und das besagtes zweite Halterungselement einen Aufhängungspunkt bilden, und eines der beiden Halterungselemente eines Aufhängungspunktes turmseitig und das andere dämpferseitig angebracht ist, und
(ii) das mindestens erste Halterungselement (3) so gestaltet und ausgestattet ist, dass es oder ein Teil davon in eine entsprechend dimensionierte und passend zu ihm ausgerichtete Öffnung (2.10) des mindestens zweiten Halterungselements (2) eingeführt und gleitend oder rutschend bis zu einem festen Lagerendpunkt (2.5) am anderen Ende der Öffnung (2.10) des mindestens zweiten Halterungselements versenkt werden kann, so dass der Schwingungsdämpfer (4) sowohl in aufrechter als auch in liegender Stellung des Turms, Turmsegments oder der Gondel-/Rotoreinheit am besagten Lagerendpunkt alleine durch seine wirksame Schwerkraft fest mit dem Turm oder Turmsegment (1) verbunden ist, und alleine durch Anheben und Herausziehen aus der Halterung wieder vom Turm, Turmsegment oder der Gondel-Rotor-Einheit gelöst werden kann,
**dadurch gekennzeichnet, dass** die Öffnung (2.10) am ihrem dem Lagerendpunkt (2.5) gegenüberliegenden offenen Ende eine erste Gleit- oder Rutschfläche (2.4) aufweist, welche einen Neigungswinkel (5) gegenüber einer Fläche jenes Teils der Anlage aufweist, an dem das zweite Halterungselement (2) befestigt wird, dessen Betrag so gewählt ist, dass ein selbständiges Gleiten oder Rutschen des ersten Halterungselements (3) auf der besagten Gleit-/Rutschfläche (2.4) des zweiten Halterungselements (2) gewährleistet ist.

2. Reversible Aufhängung nach Anspruch 1 **dadurch gekennzeichnet, dass** die erste Gleit-/ Rutschfläche (2.4) in gerader Verlängerung des Schlitzes (2.8) der Öffnung (2.10) ausgebildet ist.

3. Reversible Aufhängung nach Anspruch 1 oder 2, **dadurch gekennzeichnet, dass** die Öffnung (2.10) am ihrem dem Lagerendpunkt (2.5) gegenüberliegenden offenen Ende eine zweite Gleit- oder Rutschfläche (2.6) aufweist, welche einen Neigungswinkel (6) senkrecht zur Fläche jenes Teils der Anlage aufweist, an dem das zweite Halterungselement (2) befestigt wird, dessen Betrag so gewählt ist, dass ein selbständiges Gleiten oder Rutschen des ersten Halterungselements (3) auf der besagten Gleit-/Rutschfläche (2.6) des zweiten Halterungselements (2) gewährleistet ist.

4. Reversible Aufhängung nach Anspruch 3, **dadurch gekennzeichnet, dass** die zweite Gleit-/Rutschfläche (2.6) durch einem Knickpunkt (2.7) abgewinkelt gegenüber dem Schlitz (2.8) der Öffnung (2.10) ausgebildet ist.

5. Reversible Aufhängung nach einem der Ansprüche 1 - 4, **dadurch gekennzeichnet, dass** sie mindestens drei Aufhängungspunkte aufweist.

6. Reversible Aufhängung nach einem der Ansprüche 1 - 5, **dadurch gekennzeichnet, dass** das erste Halterungselement (3) einen im Wesentlichen runden Haltebolzen oder Haltestift (3.2) aufweist, welcher in die Öffnung (2.10) des zweiten Halterungselements (2) hinein- oder herausgeschoben werden kann, wobei die Öffnung (2.10) als Schlitz (2,8) mit am Lagerendpunkt (2.5) abgerundeten Ende ausgebildet und so dimensioniert ist, dass der Haltebolzen oder Haltestift (3.2) passend aufgenommen und gelagert wird.

7. Reversible Aufhängung nach Anspruch 6, **dadurch gekennzeichnet, dass** das erste Halterungselement (3) und / oder zweite Halterungselement (2) eine Einführvorrichtung (3.1) für den Haltebolzen/Haltestift (3.2) aufweist.

8. Reversible Aufhängung nach Anspruch 7, **dadurch gekennzeichnet, dass** die Einführvorrichtung (3.1) nach außen abgerundete, oder konisch geformte Scheiben, Platten oder Bleche (3.3) aufweist.

9. Reversible Aufhängung nach einem der Ansprüche 6 - 8, **dadurch gekennzeichnet, dass** der Schlitz (2.8) des zweiten Halterungselements (2) einen Neigungswinkel (5') gegenüber einer Fläche jenes Teils der Anlage aufweist, an dem das zweite Halterungselement (2) befestigt wird, dessen Betrag so gewählt ist, dass ein selbständiges Gleiten oder Rutschen des ersten Halterungselements (3) in der Öffnung (2.10) bzw. im Schlitz (2.8) gewährleistet ist.

10. Reversible Aufhängung nach einem der Ansprüche 1 - 9, **dadurch gekennzeichnet, dass** der besagte jeweilige Neigungswinkel (5)(6) 20 - 40° beträgt.

11. Verwendung einer reversiblen Aufhängung gemäß einem der Ansprüche 1 - 10, zur Errichtung oder Demontage einer Windkraftanlage.

12. Verwendung einer reversiblen Aufhängung gemäß einem der Ansprüche 1 - 10 bei der Montage oder Demontage eines im Wesentlichen für die Errichtung oder Demontage einer Windkraftanlage vorgesehenen Schwingungsdämpfers (4) am stehenden oder liegenden Turm, Turmsegment oder an der Gondel-Rotor-Einheit.

13. Windkraftanlage, **dadurch gekennzeichnet, dass** sie im Zuge der Errichtung oder Demontage des Turms, mindestens eine reversible Aufhängung gemäß der Ansprüche 1 - 12, sowie einen im Wesentlichen für die Errichtung oder Demontage einer Windkraftanlage vorgesehenen Schwingungsdämpfer (4) aufweist.

## Claims

1. Reversible suspension comprising at least one suspension point for a vibration damper of a wind turbine, suitable for the construction and/or disassembly of the tower, individual tower segments, and the nacelle/rotor unit or parts thereof, the attachment or removal of the vibration damper at or from the tower or tower segment or the nacelle/rotor unit taking place on the outside and no additional fastening means being required, the reversible suspension comprising at least one rigidly attached first holding element (3) and at least one rigidly attached second holding element (2),
(i) said first holding element and said second holding element forming a suspension point, and one of the two holding elements of a suspension point being attached on the tower side and the other on the damper side, and
(ii) the at least first holding element (3) being designed and equipped such that it or a portion thereof is insertable into a correspondingly dimensioned opening (2.10) of the at least second holding element (2), which opening is aligned with said first holding element, and is glidingly or slidingly countersunk up to a fixed bearing end point (2.5) at the other end of the opening (2.10) of the at least second holding element, so that the vibration damper (4) is rigidly connected to the tower or tower segment (1) at said bearing end point solely by its effective gravity both in the upright and in the horizontal position of the tower, tower segment or nacelle/rotor unit, and is releasable again from the tower, tower segment or the nacelle-rotor unit by being lifted and pulled out of the holder, **characterized in that** the opening (2.10) has a first gliding or sliding surface (2.4) at its open end opposite the bearing end point (2.5), which gliding or sliding surface has an angle of inclination (5) relative to a surface of the part of the turbine on which the second holding element (2) is fastened of which the value is selected such that an independent gliding or sliding of the first holding element (3) on said gliding/sliding surface (2.4) of the second holding element (2) is ensured.

2. Reversible suspension according to claim 1, **characterized in that** the first gliding/sliding surface (2.4) is formed in a straight extension of the slot (2.8) of the opening (2.10).

3. Reversible suspension according to either claim 1 or claim 2,
**characterized in that** the opening (2.10) has a second gliding or sliding surface (2.6) at its open end opposite the bearing end point (2.5), which gliding or sliding surface has an angle of inclination (6) perpendicular to the surface of the part of the turbine on which the second holding element (2) is fastened of which the value is selected such that an independent gliding or sliding of the first holding element (3) on said gliding/sliding surface (2.6) of the second holding element (2) is ensured.

4. Reversible suspension according to claim 3, **characterized in that** the second gliding/sliding surface (2.6) is formed at an angle relative to the slot (2.8) of the opening (2.10) by a kink point (2.7).

5. Reversible suspension according to any of claims 1-4, **characterized in that** it has at least three suspension points.

6. Reversible suspension according to any of claims 1-5, **characterized in that** the first holding element (3) has a substantially round holding bolt or holding pin (3.2) which can be pushed into or out of the opening (2.10) of the second holding element (2), the opening (2.10) being designed as a slot (2.8) with the end rounded at the bearing end point (2.5) and is dimensioned such that the holding bolt or holding pin (3.2) is received and mounted in a suitable manner.

7. Reversible suspension according to claim 6, **characterized in that** the first holding element (3) and/or the second holding element (2) has a feeding device (3.1) for the holding bolt/holding pin (3.2).

8. Reversible suspension according to claim 7, **characterized in that** the feeding device (3.1) has outwardly rounded or conical disks, plates or metal sheets (3.3).

9. Reversible suspension according to any of claims 6-8, **characterized in that** the slot (2.8) of the second holding element (2) has an angle of inclination (5') with respect to a surface of the part of the turbine on which the second holding element (2) is fastened of which the value is selected such that an independent gliding or sliding of the first holding element (3) is ensured in the opening (2.10) or in the slot (2.8).

10. Reversible suspension according to any of claims 1-9, **characterized in that** said corresponding angle of inclination (5)(6) is 20-40°.

11. Use of a reversible suspension according to any of claims 1-10 for the construction or disassembly of a wind turbine.

12. Use of a reversible suspension according to any of claims 1-10 during the assembly or disassembly of a vibration damper (4) provided substantially for the construction or disassembly of a wind turbine on the upright or horizontal tower, tower segment, or nacelle-rotor unit.

13. Wind turbine, **characterized in that** it has, in the course of the construction or disassembly of the tower, at least one reversible suspension according to claims 1-12 and a vibration damper (4) provided substantially for the construction or disassembly of a wind turbine.

## Revendications

1. Suspension utilisable de manière réversible, comportant au moins un point de suspension pour un amortisseur de vibrations d'une éolienne, adaptée pour la mise en place et/ou le démontage du mât, de différents segments de mât et de l'unité de nacelle/rotor ou de parties de celle-ci, dans laquelle le montage de l'amortisseur de vibrations sur le mât ou le segment de mât ou l'unité de nacelle/rotor ou son retrait de celui-ci est effectué côté extérieur et ne nécessite aucun moyen de fixation supplémentaire, comprenant au moins un premier élément formant support (3) monté fixement et au moins un second élément formant support (2) monté fixement, dans laquelle
(i) ledit premier élément formant support et ledit second élément formant support forment un point de suspension, et l'un des deux éléments formant support d'un point de suspension est monté côté mât et l'autre élément formant support est monté côté amortisseur, et
(ii) l'au moins premier élément formant support (3) est conçu et équipé de manière à ce qu'il, ou une partie de celui-ci, peut être introduit dans une ouverture (2.10) de l'au moins second élément formant support (2), laquelle ouverture est dimensionnée de manière correspondante et alignée de manière appropriée par rapport audit premier élément formant support, et peut être enfoncé par coulissement ou glissement jusqu'à un point de terminaison d'appui (2.5) fixe à l'autre extrémité de l'ouverture (2.10) de l'au moins second élément formant support, de sorte que l'amortisseur de vibrations (4), aussi bien dans une position debout que dans une position couchée du mât, du segment de mât ou de l'unité de nacelle/rotor, est relié de manière fixe au mât ou au segment de mât (1) au niveau dudit point de terminaison d'appui, uniquement grâce à sa force de gravité effective, et peut être de nouveau détaché du mât, du segment de mât ou de l'unité nacelle/rotor uniquement par soulèvement et extraction hors du support, **caractérisée en ce que** l'ouverture (2.10) présente, au niveau de son extrémité ouverte opposée au point de terminaison d'appui (2.5), une première surface de coulissement ou de glissement (2.4) qui présente un angle d'inclinaison (5) par rapport à une surface de ladite partie de l'éolienne sur laquelle est fixé le second élément formant support (2), angle dont la valeur est choisie de telle sorte qu'un coulissement ou un glissement indépendant du premier élément formant support (3) est assuré sur ladite surface de coulissement/glissement (2.4) du second élément formant support (2).

2. Suspension réversible selon la revendication 1, **caractérisée en ce que** la première surface de coulissement/glissement (2.4) est réalisée dans le prolongement rectiligne de la fente (2.8) de l'ouverture (2.10).

3. Suspension réversible selon la revendication 1 ou 2, **caractérisée en ce que** l'ouverture (2.10) présente, au niveau de son extrémité ouverte opposée au point de terminaison d'appui (2.5), une seconde surface de coulissement ou de glissement (2.6) qui présente un angle d'inclinaison (6) perpendiculaire à la surface de ladite partie de l'éolienne sur laquelle est fixé le second élément formant support (2), angle dont la valeur est choisie de telle sorte qu'un coulissement ou un glissement indépendant du premier élément formant support (3) est assuré sur ladite surface de coulissement/glissement (2.6) du second élément formant support (2).

4. Suspension réversible selon la revendication 3, **caractérisée en ce que** la seconde surface de coulissement/glissement (2.6) est réalisée par un point de courbure (2.7) coudé par rapport à la fente (2.8) de l'ouverture (2.10).

5. Suspension réversible selon l'une des revendications 1 à 4,
**caractérisée en ce qu'**elle présente au moins trois points de suspension.

6. Suspension réversible selon l'une des revendications 1 à 5, **caractérisée en ce que** le premier élément formant support (3) présente un boulon de retenue ou une goupille de retenue (3.2) sensiblement rond qui peut être logé dans l'ouverture (2.10) du second élément formant support (2) et être délogé de celle-ci, dans laquelle l'ouverture (2.10) est réalisée sous la forme d'une fente (2.8) comportant une extrémité arrondie au niveau du point de terminaison d'appui (2.5) et est dimensionnée de telle sorte que le boulon de retenue ou la goupille de retenue (3.2) est reçu et disposé de manière appropriée.

7. Suspension réversible selon la revendication 6, **caractérisée en ce que** le premier élément formant support (3) et/ou le second élément formant support (2) présentent un dispositif d'introduction (3.1) pour le boulon de retenue/la goupille de retenue (3.2).

8. Suspension réversible selon la revendication 7, **caractérisée en ce que** le dispositif d'introduction (3.1) présente des disques, plaques ou tôles (3.3) arrondis vers l'extérieur ou de forme conique.

9. Suspension réversible selon l'une des revendications 6 à 8,
**caractérisée en ce que** la fente (2.8) du second élément formant support (2) présente un angle d'inclinaison (5') par rapport à une surface de ladite partie de l'éolienne sur laquelle est fixé le second élément formant support (2), angle dont la valeur est choisie de telle sorte qu'un coulissement ou un glissement indépendant du premier élément formant support (3) est assuré dans l'ouverture (2.10) ou dans la fente (2.8).

10. Suspension réversible selon l'une des revendications 1 à 9,
**caractérisée en ce que** ledit angle d'inclinaison (5)(6) respectif est de 20 à 40°.

11. Utilisation d'une suspension réversible selon l'une des revendications 1 à 10, pour la mise en place ou le démontage d'une éolienne.

12. Utilisation d'une suspension réversible selon l'une des revendications 1 à 10 pour l'installation ou le démontage d'un amortisseur de vibrations (4) prévu sensiblement pour la mise en place d'une éolienne sur le mât, le segment de mât ou l'unité nacelle/rotor debout ou couché, ou son démontage de celui-ci.

13. Éolienne, **caractérisée en ce que**, lors de la mise en place ou du démontage du mât, elle présente au moins une suspension réversible selon les revendications 1 à 12, ainsi qu'un amortisseur de vibrations (4) prévu sensiblement pour la mise en place ou le démontage d'une éolienne.
